# EUROPÄISCHE PATENTSCHRIFT

(11) **EP 2 379 642 B1**
(45) Veröffentlichungstag und Bekanntmachung des Hinweises auf die Patenterteilung: **26.03.2014**
(21) Anmeldenummer: 09764848.9
(22) Anmeldetag: 08.12.2009
(51) Int. Cl.: C08L 71/00

(54) **BLENDS AUS POLYVYRYLENETHERN UND POLYARYLENSULFIDEN ENTHALTEND CARBONSÄUREANHYDRIDE**
BLENDS OF POLYARYLENE ETHERS AND POLYARYLENE SULFIDES COMPRISING CARBOXYLIC ANHYDRIDES
MÉLANGES D'ÉTHERS DE POLYARYLÈNE ET DE SULFURE DE POLYARYLÈNE RENFERMANT DES ANHYDRIDES D'ACIDES CARBOXYLIQUES

(30) Priorität: 17.12.2008 EP 08171958
(43) Veröffentlichungstag der Anmeldung: 26.10.2011
(73) Patentinhaber: BASF SE, 67056 Ludwigshafen (DE)
(72) Erfinder: WEBER, Martin, 67487 Maikammer (DE); MALETZKO, Christian, 67122 Altrip (DE); KHVOROST, Alexander, Moskau 119454 (RU); BLUHM, Rüdiger, 67117 Limburgerhof (DE); ZEIHER, Susanne, 67071 Ludwigshafen (DE)
(86) Internationale Anmeldenummer: PCT/EP2009/066584
(87) Internationale Veröffentlichungsnummer: WO 2010/069813

(56) Entgegenhaltungen:
- EP-A- 0 394 933
- DE-A1- 4 420 643
- GB-A- 2 218 996
- US-A- 5 214 083

## Beschreibung

Die vorliegende Erfindung betrifft Zusammensetzungen gemäß Anspruch 1 enthaltend folgende Komponenten:
(A) mindestens ein Polyarylenether,
(B) mindestens ein Polyarylensulfid, und
(C) mindestens ein Anhydrid einer mehrfunktionellen Carbonsäure mit einem zahlenmittleren Molekulargewicht von höchstens 600 g/mol, wobei die Komponente (A) die weiter unten definierten Bestandteile (A1) und (A2) umfasst.

Darüber hinaus betrifft die vorliegende Erfindung die Verwendung der genannten Anhydride mehrfunktioneller Carbonsäuren in Zusammensetzungen enthaltend mindestens ein Polyarylenether und mindestens ein Polyarylensulfid, wobei die Verwendung gemäß Anspruch 15 erfolgt.

Polyarylenether gehören zur Gruppe der Hochleistungsthermoplaste und finden aufgrund ihrer hohen Wärmeform- und Chemikalienbeständigkeit Verwendung in hoch beanspruchten Anwendungen, siehe G. Blinne, M. Knoll, D. Müller, K. Schlichting, Kunststoffe 75, 219 (1985), E. M. Koch, H.-M. Walter, Kunststoffe 80, 1146 (1990) und D. Döring, Kunststoffe 80, 1149 (1990).

Polyarylether sind amorph und weisen daher oft eine unzureichende Beständigkeit gegenüber aggressiven Medien auf. Weiterhin weisen Polyarylether auch eine hohe Schmelzeviskosität auf, was besonders die Verarbeitung zu großen Formteilen mittels Spritzguss beeinträchtigt. Die hohe Schmelzeviskosität ist auch nachteilig bei der Herstellung von Formmassen mit hoher Füllstoff- oder Faserbeladung.

Aus der EP-A 673 973 ist bekannt, dass Polymermischungen aus Polyarylenethern und Polyphenylensulfid eine verbesserte Fließfähigkeit und eine gute Chemikalienbeständigkeit aufweisen. Des Weiteren sind aus der GB-A 2 113 235 Formmassen bekannt, welche neben Polyphenylensulfid auch Polyarylenether enthalten, die Hydroxygruppen tragen. Die japanische Offenlegungsschrift JP1299872 lehrt, dass Mischungen aus Polyarylensulfonen mit Hydroxyendgruppen und Polyarylensulfiden dann verbesserte Eigenschaften aufweisen, wenn der Natriumionengehalt der Polyarylensulfidkomponente gering ist

Aufgabe der vorliegenden Erfindung war Formmassen bereitzustellen, die oben genannte Nachteile nicht aufweisen und eine hohe Reißfestigkeit, ein hohes E-Modul und eine hohe Schlagzähigkeit bei gleichzeitig guter Verarbeitbarkeit aufweisen. Die Formmassen sollten außerdem eine gute Beständigkeit gegenüber Kraftstoff aufweisen.

Die vorgenannten Aufgaben werden gelöst durch die erfindungsgemäßen Zusammensetzungen. Bevorzugte Ausführungsformen sind den Ansprüchen und der nachfolgenden Beschreibung zu entnehmen. Kombinationen bevorzugter Ausführungsformen verlassen den Rahmen der vorliegenden Erfindung nicht.

Die erfindungsgemäßen Zusammensetzungen enthalten folgende Komponenten:
(A) mindestens ein Polyarylenether,
(B) mindestens ein Polyarylensulfid, und
(C) mindestens ein Anhydrid einer mehrfunktionellen Carbonsäure mit einem zahlenmittleren Molekulargewicht von höchstens 600 g/mol, wobei die Komponente (A) die weiter unten definierten Bestandteile (A1) und (A2) umfasst.

Besonders bevorzugt enthalten die erfindungsgemäßen Zusammensetzungen von 50 bis 94,999 Gew.-% der Komponente (A), von 5 bis 49,7 Gew.-% der Komponente (B) und von 0,001 bis 0,3 Gew.-% der Komponente (C) jeweils bezogen auf die Summe der Komponenten (A), (B) und (C), wobei die Summe der Gew.-% der Komponenten (A), (B) und (C) 100 Gew.-% ergibt.

Besonders bevorzugt enthalten die erfindungsgemäßen Zusammensetzungen von 55 bis 89,995 Gew.-% der Komponente (A), von 10 bis 44,9 Gew.-% der Komponente (B) und von 0,005 bis 0,1 Ges.-% der Komponente (C) jeweils bezogen auf die Summe der Komponenten (A), (B) und (C), wobei die Summe der Gew.-% der Komponenten (A), (B) und (C) 100 Gew.-% ergibt.

Bei den Zusammensetzungen der vorliegenden Erfindung handelt es sich vorzugsweise um thermoplastische Formmassen. Die einzelnen Komponenten werden im Folgenden näher erläutert.

### Komponente A

Es hat sich als vorteilhaft erwiesen, die Endgruppe der Komponente (A) zu steuern. Üblicherweise weisen Polyarylenether Phenol-, Halogen- und/oder Ether-Endgruppen auf. Es ist für die vorliegende Erfindung von großem Vorteil, wenn Komponente (A) teilweise phenolische Endgruppen aufweist.

Komponente (A) weist demgemäß vorzugsweise einen Gehalt phenolischer Endgruppen von mindestens 0,04 Gew.-%, besonders bevorzugt mindestens 0,05, insbesondere mindestens 0,08 Gew.-% auf, berechnet als Gewichtsmenge OH bezogen auf die Gewichtsmenge der Komponente (A).

Unter phenolischer Endgruppe wird im Rahmen der vorliegenden Erfindung eine Hydroxygruppe verstanden, die an einen aromatischen Kern gebunden ist.

Die Bestimmung des Anteils der phenolischen Endgruppen erfolgt vorzugsweise durch potentiometrische Titration. Hierfür wird das Polymer in Dimethylformamid gelöst und mit einer Lösung von Tetrabutylammoniumhydroxid in Toluol/Methanol titriert. Die Endpunktserfassung erfolgt potentiometrisch. Alternativ kann die Bestimmung der Anteile der jeweiligen Endgruppen mittels ¹³C-Kernspinresonanzspektroskopie erfolgen.

Die Herstellung von Polyarylenethern bei gleichzeitiger Steuerung der Endgruppen ist dem Fachmann bekannt und wird weiter unten näher beschrieben. Die bekannten Polyarylenether weisen üblicherweise Halogen-, insbesondere -F oder -Cl, oder phenolische OH- bzw. Phenolat-Endgruppen auf, wobei letztere als solche oder in umgesetzter Form, insbesondere in Form von -OCH₃-Endgruppen, vorliegen können.

Bevorzugte Polyarylenether der Komponente (A) sind aufgebaut aus Bausteinen der allgemeinen Formel (I): 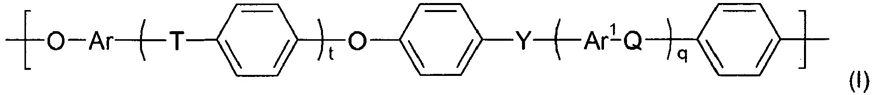 mit folgenden Bedeutungen
- t, q:: unabhängig voneinander 0, 1, 2 oder 3,
- Q, T, Y:: unabhängig voneinander jeweils eine chemische Bindung oder Gruppe, ausgewählt aus -O-, -S-, -SO₂-, S=O, C=O, -N=N- und -CR^{a}R^{b}-, wobei R^{a} und R^{b} unabhängig voneinander jeweils für ein Wasserstoffatom oder eine C₁-C₁₂-Alkyl-, C₁-C₁₂-Alkoxy- oder C₆-C₁₈-Arylgruppe stehen, wobei wenigstens eines aus Q, T und Y von -O- verschieden ist, und wenigstens eines aus Q, T und Y für -SO₂- steht und
- Ar, Ar¹:: unabhängig voneinander eine Arylengruppe mit von 6 bis 18 Kohlenstoffatomen.

Falls Q, T oder Y unter den oben genannten Voraussetzungen eine chemischen Bindung ist, dann ist darunter zu verstehen, dass die links benachbarte und die rechts benachbarte Gruppe direkt miteinander über eine chemische Bindung verknüpft vorliegen.

Vorzugsweise werden Q, T und Y in Formel (I) allerdings unabhängig voneinander ausgewählt aus -O- und -SO₂-, mit der Maßgabe, dass wenigstens eines aus der Gruppe bestehend aus Q, T und Y für -SO₂- steht.

Sofern Q, T oder Y -CR^{a}R^{b}- sind, stehen R^{a} und R^{b} unabhängig voneinander jeweils für ein Wasserstoffatom oder eine C₁-C₁₂-Alkyl-, C₁-C₁₂-Alkoxy- oder C₆-C₁₈-Arylgruppe.

Bevorzugte C₁-C₁₂-Alkylgruppen umfassen lineare und verzweigte, gesättigte Alkylgruppen mit von 1 bis 12 Kohlenstoffatomen. Insbesondere sind folgende Reste zu nennen: C₁-C₆-Alkylrest, wie Methyl, Ethyl, n-Propyl, i-Propyl, n-Butyl, sec.-Butyl, 2- oder 3-Methyl-pentyl und längerkettige Reste wie unverzweigtes Heptyl, Octyl, Nonyl, Decyl, Undecyl, Lauryl und die ein- oder mehrfach verzweigten Analoga davon.

Als Alkylreste in den vorgenannten einsetzbaren C₁-C₁₂-Alkoxygruppen kommen die weiter oben definierten Alkylgruppen mit von 1 bis 12 Kohlenstoffatomen in Betracht. Vorzugsweise verwendbare Cycloalkylreste umfassen insbesondere C₃-C₁₂-Cycloalkylreste, wie zum Beispiel Cyclopropyl, Cyclobutyl, Cyclopentyl, Cyclohexyl, Cycloheptyl, Cyclooctyl, Cyclopropylmethyl, Cyclopropylethyl, Cyclopropylpropyl, Cyclobutylmethyl, Cyclobutylethyl, Cyclpentylethyl, -propyl, -butyl, -pentyl, -hexyl, Cyclohexylmethyl, -dimethyl, -trimethyl.

Ar und Ar¹ bedeuten unabhängig voneinander eine C₆-C₁₈-Arylengruppe. Ausgehend von den weiter unten beschriebenen Ausgangsprodukten ist Ar vorzugsweise abgeleitet von einer elektronenreichen, leicht elektrophil angreifbaren aromatischen Substanz, die bevorzugt aus der Gruppe bestehend aus Hydrochinon, Resorcin, Dihydroxynaphthalin, insbesondere 2,7-Dihydroxynaphthalin, und 4,4'-Bisphenol ausgewählt wird. Vorzugsweise ist Ar¹ eine unsubstituierte C₆- oder C₁₂-Arylengruppe.

Als C₆-C₁₈-Arylengruppen Ar und Ar¹ kommen insbesondere Phenylengruppen, wie 1,2-, 1,3- und 1,4-Phenylen, Naphthylengruppen, wie beispielsweise 1,6-, 1,7-, 2,6-und 2,7-Naphthylen, sowie die von Anthracen, Phenanthren und Naphthacen abgeleiteten Arylengruppen in Betracht.

Vorzugsweise werden Ar und Ar¹ in der bevorzugten Ausführungsform gemäß Formel (I) unabhängig voneinander ausgewählt aus der Gruppe bestehend aus 1,4-Phenylen, 1,3-Phenylen, Naphthylen, insbesondere 2,7-Dihydroxynaphthalin, und 4,4'-Bisphenylen.

Im Rahmen der Komponente (A) vorzugsweise vorliegende Bausteine sind solche, die mindestens eine der folgenden wiederkehrenden Struktureinheiten la bis Io enthalten:

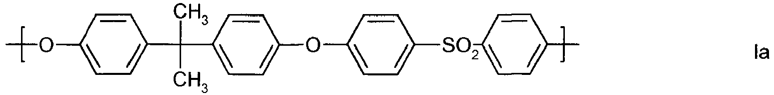

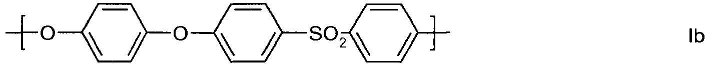

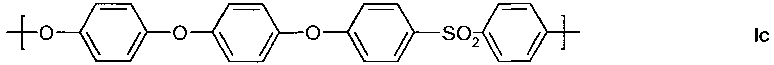

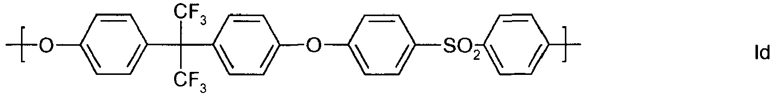

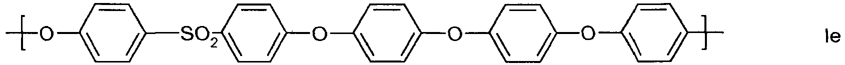

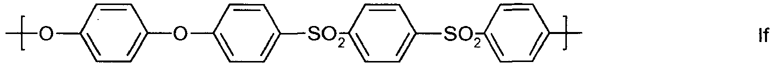

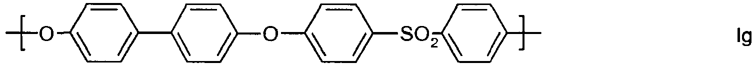

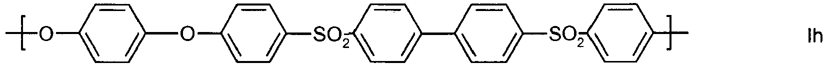

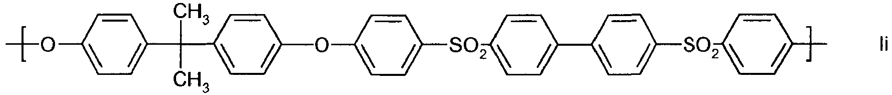

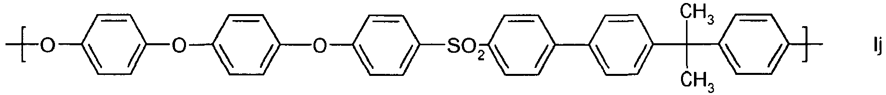

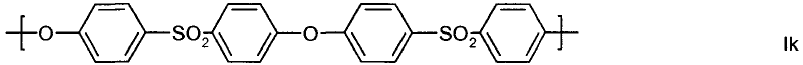

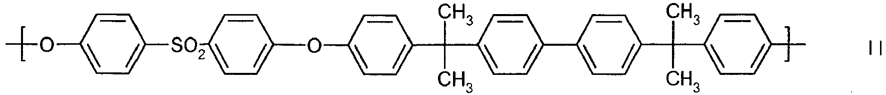

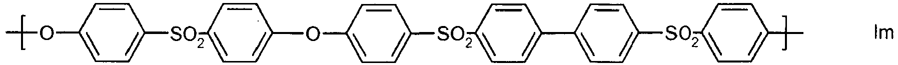

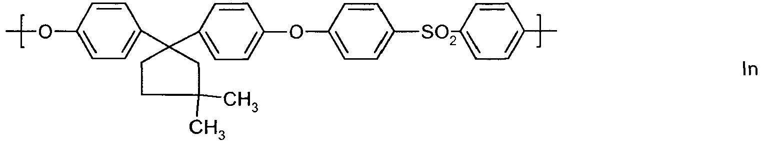

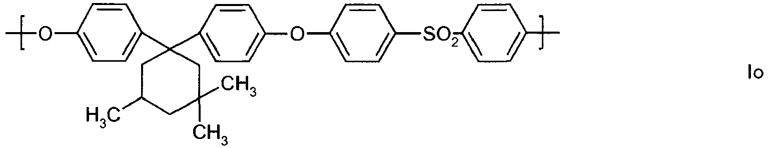

Zusätzlich zu den bevorzugt vorliegenden Bausteinen la bis Io sind auch solche Bausteine bevorzugt, in denen eine oder mehrere 1,4-Dihydroxyphenyl-Einheiten durch Resorcin- oder Dihydroxynaphthalin-Einheiten ersetzt sind.

Als Bausteine der allgemeinen Formel I besonders bevorzugt sind die Bausteine la, Ig und Ik. Es ist außerdem besonders bevorzugt, wenn die Polyarylenether der Komponente (A) im Wesentlichen aus einer Sorte Bausteine der allgemeinen Formel I, insbesondere aus einem Baustein ausgewählt aus la, Ig und Ik aufgebaut sind.

Im Allgemeinen weisen die bevorzugten Polyarylenether (A) mittlere Molekulargewichte Mₙ (Zahlenmittel) im Bereich von 5000 bis 60000 g/mol und relative Viskositäten von 0,20 bis 0,95 dl/g auf. Die relativen Viskositäten werden je nach Löslichkeit der Polyarylenethersulfone entweder in 1 gew.-%iger N-Methylpyrrolidon-Lösung, in Mischungen aus Phenol und Dichlorbenzol oder in 96-%iger Schwefelsäure bei jeweils 20°C bzw. 25 °C gemessen.

Die Polyarylenether (A) der vorliegenden Erfindung weisen vorzugsweise gewichtsmittlere Molekulargewichte M_{w} von 10.000 bis 150.000 g/mol, insbesondere von 15.000 bis 120.000 g/mol, besonders bevorzugt von 18.000 bis 100.000 g/mol auf, bestimmt mittels Gelpermeationschromatographie im Lösungsmittel Dimethylacetamid gegen engverteiltes Polymethylmethacrylat als Standard.

Herstellungsverfahren, die zu den vorgenannten Polyarylenethern führen, sind dem Fachmann bekannt.

Die Polyarylenether der Komponente (A) werden vorzugsweise durch Umsetzung mindestens einer aromatischen Verbindung (r1) mit zwei Halogensubstituenten und mindestens einer aromatischen Verbindung (r2) mit zwei funktionellen Gruppen, die gegenüber vorgenannten Halogensubstituenten reaktiv sind, hergestellt.

Für die Herstellung von Polyarylenethern geeignete aromatische Verbindungen (r1) und (r2) als Monomere sind dem Fachmann bekannt und unterliegen keiner prinzipiellen Einschränkung, sofern die genannten Substituenten im Rahmen einer nucleophilen aromatischen Substitution ausreichend reaktiv sind. Eine weitere Voraussetzung ist eine ausreichende Löslichkeit im Lösungsmittel.

Geeignete Verbindungen (r1) sind insbesondere Dihalogendiphenylsulfone wie 4,4'-Dichlordiphenylsulfon, 4,4'-Difluordiphenylsulfon, 4,4'-Dibromdiphenylsulfon, bis(2-chlorophenyl)sulfone, 2,2'-Dichlordiphenylsulfon und 2,2'-Difluordiphenylsulfon.

Vorzugsweise sind die aromatischen Verbindungen mit zwei Halogensubstituenten (r1) ausgewählt aus 4,4'-Dihalogendiphenylsulfonen, insbesondere 4,4'-Dichlordiphenylsulfon oder 4,4'-Difluordiphenylsulfon.

Die gegenüber den vorgenannten Halogensubstituenten reaktiven Gruppen sind insbesondere phenolische OH und O⁻-Gruppen, wobei letztere funktionelle Gruppe sich von den Dihydroxyverbindungen ableitet und in bekannter Weise aus einer solchen hergestellt werden kann oder intermediär entsteht. Bevorzugte Verbindungen (r2) sind demzufolge solche mit zwei phenolischen Hydroxygruppen.

Bevorzugte Verbindungen (r2) mit zwei phenolischen Hydroxygruppen werden aus folgenden Verbindungen ausgewählt:
- Dihydroxybenzole, insbesondere Hydrochinon und Resorcin;
- Dihydroxynaphthaline, insbesondere 1,5-Dihydroxynaphthalin, 1,6- Dihydroxynaphthalin, 1,7- Dihydroxynaphthalin, und 2,7- Dihydroxynaphthalin;
- Dihydroxybiphenyle, insbesondere 4,4'-Biphenol und 2,2'-Biphenol;
- Bisphenylether, insbesondere Bis(4-hydroxyphenyl)ether und Bis(2-hydroxyphenyl)ether;
- Bisphenylpropane, insbesondere 2,2-Bis(4-hydroxyphenyl)propan, 2,2-Bis(3-methyl-4-hydroxyphenyl)propan, und 2,2-Bis(3,5-dimethyl-4-hydroxyphenyl)propan;
- Bisphenylmethane, insbesondere Bis(4-hydroxyphenyl)methan;
- Bisphenylsulfone, insbesondere Bis(4-hydroxyphenyl)sulfon;
- Bisphenylsulfide, insbesondere Bis(4-hydroxyphenyl)sulfid;
- Bisphenylketone, insbesondere Bis(4-hydroxyphenyl)keton;
- Bisphenylhexafluoropropane, insbesondere 2,2-Bis(3,5-dimethyl-4-hydroxyphenyl)hexafluoropropan; und
- Bisphenylfluorene, insbesondere 9,9-Bis(4-hydroxyphenyl)fluoren.

Es ist bevorzugt ausgehend von den vorgenannten aromatischen Dihydroxyverbindungen (r2) ihre Dikalium- oder Dinatriumsalze herzustellen und mit der Verbindung (r1) zur Reaktion zu bringen. Die vorgenannten Verbindungen können einzeln oder als Kombination zwei oder mehrerer der vorgenannten Verbindungen eingesetzt werden.

Hydrochinon, Resorcin, Dihydroxynaphthalin, insbesondere 2,7- Dihydroxynaphthalin, und 4,4'-Bisphenol sind als aromatische Verbindung (r2) mit zwei funktionellen Gruppen, die gegenüber den Halogensubstituenten der aromatischen Verbindung (r1) reaktiv sind, besonders bevorzugt.

Die einzusetzenden Mengenverhältnisse ergeben sich aus der Stöchiometrie der ablaufenden Polykondensationsreaktion unter rechnerischer Abspaltung von Chlorwasserstoff und werden vom Fachmann in bekannter Weise eingestellt.

Für die Steuerung der Zahl der phenolischen Endgruppen stehen dem Fachmann unterschiedliche Verfahren zur Verfügung.

Die Einstellung des Verhältnisses von Halogen-Endgruppen zu phenolischen Endgruppen kann beispielsweise durch gezielte Einstellung eines Überschusses einer Dihydroxyverbindung bei der Herstellung der Polyarylenether wie weiter unten beschrieben erzielt werden.

Das molare Verhältnis von Monomeren mit Hydroxyfunktionalitäten zu Monomeren mit Halogenfunktionalitäten liegt bei 0,9 zu 1,1 bis 1,1 zu 0,9, bevorzugt bei 0,95 zu 1,05 bis 1,05 zu 0,95, besonders bevorzugt bei 1 zu 1. Liegen verschiedene Monomere mit Hydroxyfunktionalitäten oder mit Halogenfunktionalitäten vor, so werden jeweils die molaren Mengen in Summe betrachtet.

Besonders bevorzugt ist die Umsetzung der Monomere in aprotischen polaren Lösungsmitteln in Gegenwart von wasserfreiem Alkalicarbonat, insbesondere Natrium-, Kalium-, Calciumcarbonat oder Mischungen davon, wobei Kaliumcarbonat ganz besonders bevorzugt ist, insbesondere Kaliumcarbonat mit einer volumengewichteten mittleren Teilchengröße von weniger als 100 Mikrometer, bestimmt mit einem Partikelgrößenmessgerät in einer Suspension in N-Methylpyrrolidon. Eine besonders bevorzugte Kombination ist N-Methylpyrrolidon als Lösungsmittel und Kaliumcarbonat als Base.

Die Umsetzung der geeigneten Monomere wird bei einer Temperatur von 80 bis 250°C, bevorzugt 100 bis 220°C durchgeführt. Die Umsetzung wird für 2 bis 12 h, bevorzugt 3 bis 8 h durchgeführt. Nach Beendigung der Polykondensationsreaktion kann dem Reaktionsgemisch ein monofunktionelles Alkyl- oder Arylhalogenid, beispielsweise C₁-C₆-Alkylchlorid, -bromid oder -iodid, bevorzugt Methylchlorid, oder Benzylchlorid, -bromid oder -iodid oder Mischungen davon, zugesetzt werden. Diese Verbindungen reagieren mit den Hydroxygruppen an den Enden der Makromoleküle und bilden somit die Anfangs- bzw. Endstücke der Makromoleküle.

Die Umsetzung in der Schmelze ist ebenfalls möglich. Die Polykondensation in der Schmelze wird bei einer Temperatur von 140 bis 290°C, bevorzugt 150 bis 280°C durchgeführt.

Die Reinigung der Polyarylenether-Copolymere erfolgt nach dem Fachmann bekannten Methoden, beispielsweise Waschen mit geeigneten Lösungsmitteln, in denen die erfindungsgemäßen Polyarylenether-Copolymere bevorzugt größtenteils unlöslich sind.

Gemäß der vorliegenden Erfindung enthält die Komponente (A) zwei verschiedene Polyarylenether (A1) und (A2).

Die erfindungsgemäßen Zusammensetzungen enthalten als Komponente (A) demgemäß folgende Bestandteile:
(A1) mindestens ein Polyarylenether mit höchstens 0,01 Gew.-% phenolischer Endgruppen berechnet als Gewichtsmenge OH bezogen auf die Gewichtsmenge der Komponente (A1), und
(A2) mindestens ein Polyarylenether mit mindestens 0,1 Gew.-% phenolischer Endgruppen berechnet als Gewichtsmenge OH bezogen auf die Gewichtsmenge der Komponente (A2).

Die jeweilige Obergrenze für den Gehalt phenolischer Endgruppen in den Komponenten (A) bzw. (A2) ergeben sich aus der Zahl der zur Verfügung stehenden Endgruppen pro Molekül (zwei im Fall linearer Polyarylenether) und der Kettenlänge. Entsprechende Berechnungen sind dem Fachmann bekannt.

Vorzugsweise beträgt der Anteil der phenolischen Endgruppen der Komponente (A1) weniger als 0,01 Gew.-% OH bezogen auf die Gesamtmenge der Komponente (A1), insbesondere weniger als 0,001 Gew.-%.

Vorzugsweise beträgt der Anteil der phenolischen Endgruppen der Komponente (A2) mindestens 0,15 Gew.-% OH bezogen auf die Gesamtmenge der Komponente (A2), besonders bevorzugt mindestens 0,2 Gew.-%.

Die Bestimmung der phenolischen Endgruppen erfolgt wie oben beschrieben mittels potentiometrischer Titration.

In einer besonders bevorzugten Ausführungsform ist Komponente (A) eine Mischung aus folgenden Bestandteilen:
(A1) von 75 bis 99 Gew.-% mindestens eines Polyarylenethers mit weniger als 0,01 Gew.-% phenolischer Endgruppen berechnet als Gewichtsteile OH bezogen auf die Gewichtsmenge der Komponente (A1) und
(A2) von 1 bis 25 Gew.-% mindestens eines Polyarylenethers mit mindestens 0,1 Gew.-% phenolischer Endgruppen berechnet als Gewichtsteile OH bezogen auf die Gewichtsmenge der Komponente (A2).

In dieser bevorzugten Ausführungsform besteht die Komponente (A) besonders bevorzugt aus von 80 bis 98 Gew.-%, insbesondere von 85 bis 97 Gew.-%, des genannten Bestandteiles (A1) und von 2 bis 20 Gew.-%, insbesondere von 3 bis 15 Gew.-%, des genannten Bestandteils (A2).

Die Polyarylenether (A1) und (A2) gemäß dieser bevorzugten Ausführungsform können - abgesehen von den Endgruppen - gleich sein oder aus unterschiedlichen Bausteinen aufgebaut sein und/oder ein unterschiedliches Molekulargewicht aufweisen, sofern sie dann noch miteinander vollständig mischbar sind.

Es ist jedoch bevorzugt, wenn die Bestandteile (A1) und (A2) strukturell eine weitgehende Übereinstimmung aufweisen, insbesondere aus denselben Bausteinen aufgebaut sind und ein ähnliches Molekulargewicht aufweisen.

Ein bevorzugtes Verfahren zur Herstellung von Polyarylenethern der Komponente (A2) wird nachfolgend beschrieben und umfasst folgende Schritte in der Reihenfolge a-b-c:
(a) Bereitstellung mindestens eines Polyarylenethers (P) in Gegenwart eines Lösungsmittels (L), der überwiegend Phenolat-Endgruppen aufweist und vorzugsweise aufgebaut ist aus Bausteinen der allgemeinen Formel I wie oben definiert,
(b) Zugabe mindestens einer Säure, vorzugsweise mindestens einer mehrfunktionellen Carbonsäure, und
(c) Gewinnung der Polyarylenether der Komponente (A2) als Feststoff.

Unter Phenolat-Endgruppen werden im Rahmen der vorliegenden Erfindung negativ geladene Sauerstoffatome in Form einer Endgruppe verstanden, die an einen aromatischen Kern gebunden sind. Diese Endgruppen leiten sich von den phenolischen Endgruppen durch Entfernung eines Protons ab. Bei den genannten aromatischen Kernen handelt es sich vorzugsweise um 1,4-Phenylengruppen. Die Polyarylenether (P) der vorliegenden Erfindung können einerseits Phenolat- bzw. phenolische OH-Endgruppen und andererseits Halogenendgruppen aufweisen.

Unter dem Begriff "überwiegend Phenolat-Endgruppen" ist zu verstehen, dass mehr als 50 % der vorhandenen Endgruppen Phenolat-Endgruppen sind. Entsprechend ist unter dem Begriff "überwiegend phenolische Endgruppen" zu verstehen, dass mehr als 50 % der vorhandenen Endgruppen phenolischer Art sind.

Die Bestimmung des Anteils der Phenolat-Endgruppen erfolgt vorzugsweise durch Bestimmung der OH-Endgruppen mittels potentiometrischer Titration und Bestimmung der organisch gebundenen Halogen-Endgruppen mittels Atomspektroskopie und anschließender Berechnung der jeweiligen Zahlenanteile in %. Entsprechende Methoden sind dem Fachmann bekannt. Alternativ kann die Bestimmung der Anteile der jeweiligen Endgruppen mittels ¹³C-Kernspinresonanzspektroskopie erfolgen.

Die Bereitstellung des Polyarylenethers (P) erfolgt dabei bevorzugt in Form einer Lösung im Lösungsmittel (L).

Polyarylenether mit überwiegend phenolischen Endgruppen werden im Folgenden als reaktive Polyarylenether bezeichnet.

Vorzugsweise weisen die Polyarylenether (P) mittlere Molekulargewichte Mₙ (Zahlenmittel) im Bereich von 2.000 bis 60.000 g/mol, insbesondere 5.000 bis 40.000 g/mol, bestimmt mittels Gelpermeationschromatographie im Lösungsmittel Dimethylacetamid gegen engverteiltes Polymethylmethacrylat als Standard auf.

Vorzugsweise weisen die Polyarylenether (P) relative Viskositäten von 0,20 bis 0,95 dl/g, insbesondere von 0,30 bis 0,80 auf. Die relativen Viskositäten werden je nach Löslichkeit der Polyarylenethersulfone entweder in 1 gew.-%iger N-Methylpyrrolidon-Lösung, in Mischungen aus Phenol und Dichlorbenzol oder in 96-%iger Schwefelsäure bei jeweils 20°C bzw. 25°C gemessen.

Die Bereitstellung der beschriebenen Polyarylenether (P) kann im Prinzip auf verschiedene Weise erfolgen. Beispielsweise kann ein entsprechender Polyarylenether (P) direkt mit einem geeigneten Lösungsmittel in Kontakt gebracht und direkt, d. h. ohne weitere Umsetzung, im erfindungsgemäßen Verfahren eingesetzt werden. Alternativ können Präpolymere von Polyarylenethern eingesetzt und zur Umsetzung in Gegenwart eines Lösungsmittels gebracht werden, wobei die beschriebenen Polyarylenether (P) in Gegenwart des Lösungsmittels entstehen.

Die Bereitstellung des Polyarylenethers oder der Polyarylenether (P) mit überwiegend Phenolat- Endgruppen in Schritt (a) erfolgt jedoch vorzugsweise durch Umsetzung mindestens einer Ausgangsverbindung der Struktur X-Ar-Y (s1) mit mindestens einer Ausgangsverbindung der Struktur HO-Ar¹-OH (s2) in Gegenwart eines Lösungsmittels (L) und einer Base (B), wobei
- Y ein Halogenatom ist,
- X ausgewählt wird aus Halogenatomen und OH und
- Ar und Ar¹ unabhängig voneinander eine Arylengruppe mit 6 bis 18 Kohlenstoffatomen darstellen.

Der Polyarylenether (P) weist vorzugsweise mindestens 60 %, besonders bevorzugt mindestens 80 %, insbesondere mindestens 90 % Phenolat-Endgruppen bezogen auf die Gesamtzahl der Endgruppen auf.

Das Verhältnis von (s1) und (s2) wird dabei so gewählt, dass die Zahl der phenolischen bzw. Phenolat-Endgruppen die Zahl der Halogen-Endgruppen übersteigt.

Geeignete Ausgangsverbindungen sind dem Fachmann bekannt oder können nach bekannten Methoden hergestellt werden. Bevorzugte Ausgangsverbindungen (s1) bzw. (s2) sind identisch zu den im Rahmen von Komponente (A) oben genannten Ausgangsverbindungen (r1) bzw. (r2).

Hydrochinon, Resorcin, Dihydroxynaphthalin, insbesondere 2,7- Dihydroxynaphthalin, und 4,4'-Bisphenol sind als Ausgangsverbindung (s2) besonders bevorzugt.

Es ist jedoch auch möglich, trifunktionelle Verbindungen zu verwenden. In diesem Fall entstehen verzweigte Strukturen. Sofern eine trifunktionelle Ausgangsverbindung (s2) zum Einsatz kommt, ist 1,1,1-Tris(4-hydroxyphenyl)ethan bevorzugt.

Die einzusetzenden Mengenverhältnisse ergeben sich im Prinzip aus der Stöchiometrie der ablaufenden Polykondensationsreaktion unter rechnerischer Abspaltung von Chlorwasserstoff und werden vom Fachmann in bekannter Weise eingestellt. Um jedoch die Zahl der phenolischen OH-Endgruppen zu erhöhen, ist ein Überschuss an (s2) zu bevorzugen.

Besonders bevorzugt beträgt das Molverhältnis (s2)/(s1) in dieser Ausführungsform von 1,005 bis 1,2, insbesondere 1,01 bis 1,15, ganz besonders bevorzugt 1,02 bis 1,1.

Alternativ kann auch eine Ausgangsverbindung (s1) mit X = Halogen und Y = OH eingesetzt werden. In diesem Fall erfolgt die Einstellung eines Überschusses von Hydroxygruppen durch Zugabe der Ausgangsverbindung (s2). In diesem Fall beträgt das Verhältnis der eingesetzten phenolischen Endgruppen zu Halogen vorzugsweise von 1,01 bis 1,2, insbesondere 1,03 bis 1,15, ganz besonders bevorzugt 1,05 bis 1,1.

Vorzugsweise beträgt der Umsatz bei der Polykondensation mindestens 0,9, wodurch ein ausreichend hohes Molekulargewicht gewährleistet wird. Sofern als Vorstufe des Polyarylenethers ein Präpolymer verwendet wird, bezieht sich der Polymerisationsgrad auf die Zahl der eigentlichen Monomere.

Bevorzugte Lösungsmittel (L) sind aprotische polare Lösungsmittel. Geeignete Lösungsmittel weisen außerdem einen Siedepunkt im Bereich von 80 bis 320°C, insbesondere 100 bis 280°C, bevorzugt von 150 bis 250°C auf. Geeignete aprotische polare Lösungsmittel sind beispielsweise hochsiedende Ether, Ester, Ketone, asymmetrisch halogenierte Kohlenwasserstoffe, Anisol, Dimethylformamid, Dimethylsulfoxid, Sulfolan und N-Methyl-2-pyrrolidon.

Vorzugsweise erfolgt die Umsetzung der Ausgangsverbindungen (s1) und (s2) in den genannten aprotischen polaren Lösungsmitteln (L), insbesondere N-Methyl-2-pyrollidon.

Dem Fachmann ist an sich bekannt, dass die Umsetzung der phenolischen OH-Gruppen vorzugsweise in Gegenwart einer Base (B) erfolgt, um die Reaktivität gegenüber den Halogensubstituenten der Ausgangsverbindung (s1) zu erhöhen.

Vorzugsweise sind die Basen (B) wasserfrei. Geeignete Basen sind insbesondere wasserfreies Alkalicarbonat, vorzugsweise Natrium-, Kalium-, Calciumcarbonat oder Mischungen davon, wobei Kaliumcarbonat ganz besonders bevorzugt ist, insbesondere Kaliumcarbonat mit einer volumengewichteten mittleren Teilchengröße von weniger als 100 Mikrometer, bestimmt mit einem Partikelgrößenmessgerät in einer Suspension in N-Methyl-2-pyrrolidon.

Eine besonders bevorzugte Kombination ist N-Methyl-2-pyrrolidon als Lösungsmittel (L) und Kaliumcarbonat als Base (B).

Die Umsetzung der geeigneten Ausgangsverbindungen (s1) und (s2) wird bei einer Temperatur von 80 bis 250°C, bevorzugt 100 bis 220°C durchgeführt, wobei die Obergrenze der Temperatur durch den Siedepunkt des Lösungsmittels begrenzt wird.

Die Umsetzung erfolgt vorzugsweise in einem Zeitintervall von 2 bis 12 h, insbesondere von 3 bis 8 h.

Es hat sich als vorteilhaft erwiesen, in Anschluss an Schritt (a) und vor Ausführung des Schrittes (b) eine Filtration der Polymerlösung durchzuführen. Hierdurch wird der bei der Polykondensation gebildete Salzanteil sowie eventuell gebildete Gelkörper entfernt.

Es hat sich zudem als vorteilhaft herausgestellt, im Rahmen von Schritt (a) die Menge des Polyarylenethers (P) bezogen auf das Gesamtgewicht der Mischung aus Polyarylenether (P) und Lösungsmittel (L) von 10 bis 70 Gew.-%, vorzugsweise von 15 bis 50 Gew.-% einzustellen.

Im Rahmen von Schritt (b) erfolgt die Zugabe mindestens einer Säure, vorzugsweise mindestens einer mehrfunktionellen Carbonsäure zum Polyarylenether (P) aus Schritt (a), vorzugsweise zur Lösung des Polyarylenethers (P) im Lösungsmittel (L).

Unter "mehrfunktionell" ist eine Funktionalität von mindestens 2 zu verstehen. Die Funktionalität ist die (gegebenenfalls mittlere) Zahl an COOH-Gruppen pro Molekül. Unter mehrfunktionell wird eine Funktionalität von zwei oder höher verstanden. Im Rahmen der vorliegenden Erfindung bevorzugte Carbonsäuren sind di- und trifunktionelle Carbonsäuren.

Die Zugabe der mehrfunktionellen Carbonsäure kann auf verschiedene Weise erfolgen, insbesondere in fester oder flüssiger Form oder in Form einer Lösung, vorzugsweise in einem Lösungsmittel, welches mit dem Lösungsmittel (L) mischbar ist.

Vorzugsweise weist die mehrfunktionelle Carbonsäure ein zahlenmittleres Molekulargewicht von höchstens 1500 g/mol, insbesondere höchstens 1200 g/mol auf. Gleichzeitig weist die mehrfunktionelle Carbonsäure vorzugsweise ein zahlenmittleres Molekulargewicht von mindestens 90 g/mol auf.

Geeignete mehrfunktionelle Carbonsäuren sind insbesondere solche gemäß der allgemeinen Struktur II:

HOOC-R-COOH (II),

wobei R ein Kohlenwasserstoffrest mit von 2 bis 20 Kohlenstoffatomen repräsentiert, der optional weitere funktionelle Gruppen, vorzugsweise ausgewählt aus OH und COOH, enthält.

Bevorzugte mehrfunktionelle Carbonsäuren sind C₄ bis C₁₀-Dicarbonsäuren, insbesondere Bernsteinsäure, Glutarsäure, Adipinsäure, und Tricarbonsäuren, insbesondere Zitronensäure.

Besonders bevorzugte mehrfunktionelle Carbonsäuren sind Bernsteinsäure und Zitronensäure.

Um eine ausreichende Umwandlung der Phenolat-Endgruppen in phenolische Endgruppen zu gewährleisten hat es sich als vorteilhaft erwiesen, die Menge der eingesetzten mehrfunktionellen Carbonsäure oder mehrfunktionellen Carbonsäuren in Bezug auf die Menge der Phenolat-Endgruppen einzustellen.

Es ist bevorzugt im Rahmen von Schritt (b) eine mehrfunktionelle Carbonsäure in einer Menge von 25 bis 200 mol-% Carboxylgruppen, vorzugsweise von 50 bis 150 mol-% Carboxylgruppen, besonders bevorzugt von 75 bis 125 mol-% Carboxylgruppen, bezogen auf die Stoffmenge an Phenolat- bzw. phenolische Endgruppen zuzugeben.

Wird zu wenig Säure dosiert, ist das Fällverhalten der Polymerlösung ungenügend, während bei einer deutlichen Überdosierung eine Verfärbung des Produktes bei der weiteren Verarbeitung auftreten kann.

Die Bestimmung der Stoffmenge an Phenolat- bzw. phenolischen Endgruppen erfolgt mittels potentiometrischer Titration der phenolischen OH-Gruppen einerseits und Bestimmung der organisch gebundenen Halogen-Endgruppen mittels Atomspektroskopie andererseits, woraus der Fachmann das zahlenmittlere Molekulargewicht und die vorliegende Stoffmenge Phenolat-Endgruppen bzw. phenolische Endgruppen bestimmt.

Im Rahmen von Schritt (c) erfolgt die Gewinnung des Polyarylenethers (A2) als Feststoff.

Grundsätzlich kommen verschiedene Verfahren zur Gewinnung als Feststoff in Betracht. Bevorzugt ist jedoch eine Gewinnung der Polymerzusammensetzung durch Ausfällung.

Die bevorzugte Ausfällung kann insbesondere durch Mischung des Lösungsmittels (L) mit einem schlechten Lösungsmittel (L') erfolgen. Ein schlechtes Lösungsmittel ist ein Lösungsmittel, in dem sich die Polymerzusammensetzung nicht löst. Ein solches schlechtes Lösungsmittel ist vorzugsweise ein Gemisch aus einem Nicht-Lösungsmittel und einem Lösungsmittel. Ein bevorzugtes Nicht-Lösungsmittel ist Wasser. Ein bevorzugtes Gemisch (L') aus einem Lösungsmittel mit einem Nicht-Lösungsmittel ist vorzugsweise ein Gemisch aus dem Lösungsmittel (L), insbesondere N-Methyl-4-pyrrolidon, und Wasser. Es ist bevorzugt, die Polymerlösung aus Schritt (b) zu dem schlechten Lösungsmittel (L') hinzuzugeben, was zur Ausfällung der Polymerzusammensetzung führt. Dabei wird vorzugsweise ein Überschuss des schlechten Lösungsmittels eingesetzt. Besonders bevorzugt erfolgt die Zugabe der Polymerlösung aus Schritt (a) in fein verteilter Form, insbesondere in Tropfenform.

Sofern als schlechtes Lösungsmittel (L') eine Mischung aus dem Lösungsmittel (L), insbesondere N-Methyl-2-pyrollidon, und einem Nicht-Lösungsmittel, insbesondere Wasser, verwendet wird, dann ist ein Mischungsverhältnis Lösungsmittel:Nicht-lösungsmittel von 1:2 bis 1:100, insbesondere 1:3 bis 1:50 zu bevorzugen.

Als schlechtes Lösungsmittel (L') ist eine Mischung aus Wasser und N-Methyl-2-pyrrolidon (NMP) in Kombination mit N-Methyl-2-pyrrolidon als Lösungsmittel (L) bevorzugt. Besonders bevorzugt ist als schlechtes Lösungsmittel (L') ein Gemisch NMP/Wasser von 1:3 bis 1:50, insbesondere 1:30.

Die Ausfällung erfolgt besonders effizient, wenn der Gehalt der Polymerzusammensetzung im Lösungsmittel (L) bezogen auf das Gesamtgewicht der Mischung aus Polymerzusammensetzung und Lösungsmittel (L) von 10 bis 50 Gew.-%, vorzugsweise von 15 bis 35 Gew.-% beträgt.

Komponente (A2) weist vorzugsweise einen Kaliumgehalt von höchstens 600 ppm auf. Der Kaliumgehalt wird mittels Atomspektrometrie bestimmt.

### Komponente B

Die erfindungsgemäßen Formmassen enthalten als Komponente (B) mindestens ein Polyarylensulfid. Als Komponente (B) kommen prinzipiell alle Polyarylensulfide in Betracht.

Vorzugsweise enthalten die Polyarylensulfide der Komponente (B) von 30 bis 100 Gew.-% aus Wiederholungseinheiten gemäß der allgemeinen Formel -Ar-S-, wobei - Ar- eine Arylengruppe mit 6 bis 18 Kohlenstoffatomen darstellt.

Bevorzugt werden Polyarylensulfide, die mindestens 30 Gew.-%, insbesondere mindestens 70 Gew.-% Wiederholungseinheiten (III): 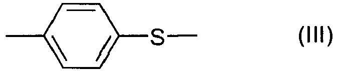 enthalten. Geeignete weitere Wiederholungseinheiten sind beispielsweise 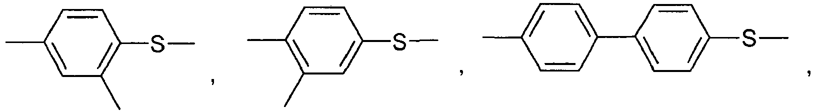 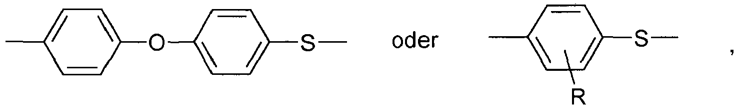 worin R C₁- bis C₁₀-Alkyl, bevorzugt Methyl bedeutet. Die Polyarylensulfide können sowohl statistische Copolymere als auch Blockcopolymere sein. Ganz besonders bevorzugte Polyarylensulfide enthalten 100 mol-% Einheiten der allgemeinen Formel (III). Besonders bevorzugt ist Komponente (B) somit ein Polyphenylensulfid, insbesondere Poly(1,4-phenylensulfid).

Als Endgruppen kommen z.B. Halogen, Thiol oder Hydroxy, bevorzugt Halogen in Betracht.

Die Polyarylensulfide können verzweigt oder unverzweigt sein. Die bevorzugten Polyarylensulfide weisen gewichtsmittlere Molgewichte von 1.000 bis 1.000.000 g/mol auf.

Derartige Polyarylensulfide sind an sich bekannt oder nach bekannten Methoden erhältlich. Beispielsweise können sie, wie in der US 2,513,188 beschrieben, durch Umsetzen von Halogenaromaten mit Schwefel oder Metallsulfiden hergestellt werden. Ebenso ist es möglich, Metallsalze von mit Halogen substituierten Thiophenolen zu erhitzen (siehe GB-B 962 941). Zu den bevorzugten Synthesen von Polyarylensulfiden zählt die Umsetzung von Alkalimetallsulfiden mit Halogenaromaten in Lösung, wie sie z.B. der US 3,354,129 zu entnehmen ist. Weitere Verfahren sind in US 3,699,087, US 4,645,826 und J.P. Critchley et al., "Heat Resistant Polymers", Seiten 151 bis 160 (1983), Plenum Press, New York, beschrieben.

### Komponente C

Die erfindungsgemäßen Zusammensetzungen enthalten mindestens ein Anhydrid einer mehrfunktionellen Carbonsäure mit einem zahlenmittleren Molekulargewicht von höchstens 600 g/mol, vorzugsweise von 90 g/mol bis 500 g/mol, insbesondere von 90 g/mol bis 400 g/mol.

Die erfindungsgemäßen Zusammensetzungen sind erhältlich durch Zugabe von mindestens einem Anhydrid einer mehrfunktionellen Carbonsäure mit einem zahlenmittleren Molekulargewicht von höchstens 600 g/mol, vorzugsweise von 90 g/mol bis 500 g/mol, insbesondere von 90 g/mol bis 400 g/mol zu den Komponenten (A) und (B) wie oben beschrieben.

Bevorzugte Anhydride (C) weisen eine geringe Flüchtigkeit auf und sind wenig toxisch, idealer weise nicht toxisch.

Es ist für den Fachmann offensichtlich, dass die eingesetzten Anhydride gegenüber den phenolischen Endgruppen in Komponente (A) bzw. (B) reaktiv sind und deshalb in den erfindungsgemäßen Zusammensetzungen nicht oder nicht vollständig als Anhydrid vorliegen, sondern ganz oder teilweise in umgesetzter Form.

Die Anhydride der Komponente (C) liegen jedoch in den erfindungsgemäßen Zusammensetzungen nicht eingebaut in eine Polymerkette oder in gepfropfter oder anderer Form als Copolymer vor, sondern als Additive, die mit reaktiven Endgruppen umgesetzt vorliegen können. Die erfindungsgemäß eingesetzten Anhydride sind somit von Polymeren und /oder Copolymeren enthaltend co-polymerisierte Anhydride zu unterscheiden.

Die Funktionalität ist die (gegebenenfalls mittlere) Zahl an COOH-Gruppen pro Molekül. Unter mehrfunktionell wird eine Funktionalität von zwei oder höher verstanden. Im Rahmen der vorliegenden Erfindung bevorzugte Anhydride sind solche, die auf Basis einer Carbonsäure aufgebaut sind, deren Funktionalität 2 oder 3 ist.

Vorzugsweise besteht Komponente (C) aus mindestens einem Anhydrid einer mehrfunktionellen Carbonsäure gemäß der allgemeinen Struktur IV:

HOOC-R-COOH (IV),

wobei R einen linearen oder verzweigten Kohlenwasserstoffrest mit von 2 bis 20 Kohlenstoffatomen repräsentiert, der optional weitere funktionelle Gruppen, vorzugsweise ausgewählt aus OH und COOH, enthält, mit der Maßgabe, dass die mehrfunktionellen Carbonsäuren ein Anhydrid bilden können, vorzugsweise ein zyklisches Anhydrid, insbesondere indem mindestens zwei COOH-Gruppen über 2 oder 3 Kohlenstoffatome miteinander verknüpft sind.

Cycloaliphatische Dicarbonsäureanhydride, insbesondere 1,2-Cyclohexandicarbonsäureanhydrid, sind somit ebenfalls bevorzugt. Bevorzugte Anhydride auf Basis cycloaliphatischer Dicarbonsäuren weisen folgende Struktur (V) auf: 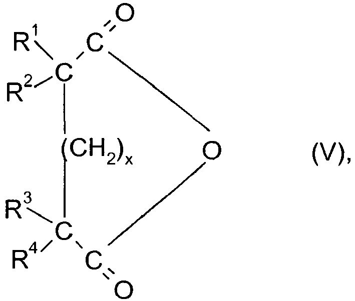 wobei R¹ bis R⁴ unabhängig voneinander ausgewählt werden aus H und linearen oder verzweigten Alkylketten mit von 1 bis 10 Kohlenstoffatomen, vorzugsweise H, sowie x = 0 oder 1.

Bevorzugte Anhydride sind insbesondere C₄ - C₁₀ aliphatische Dicarbonsäureanhydride. Als Carbonsäureanhydride sind bevorzugt: Bernsteinsäureanhydrid, Alkylbernsteinsäureanhydride, Phthalsäureanhydrid, Trimellitinsäureanhydride, Tetrahydrophthalsäureanhydrid, Hexahydrophthalsäureanhydrid, 5-Norbornen-2,3-dicarbonsäureanhydrid, Norbornancarbonsäureanhydrid und Glutarsäureanhydrid. Besonders bevorzugt sind Bernsteinsäureanhydrid, Glutarsäureanhydrid und Adipinsäureanhydrid.

Darüber hinaus kommen an sich auch Dicarbonsäureanhydride enthaltende Verbindungen in Betracht, die ethylenisch ungesättigte Gruppen enthalten, beispielsweise Maleinsäureanhydrid. Vorzugsweise werden jedoch Anhydride verwendet, die keine reaktive Doppelbindungen aufweisen.

Bernsteinsäureanhydrid ist als Komponente (C) ganz besonders bevorzugt.

### Komponente D

In einer bevorzugten Ausführungsform der vorliegenden Erfindung enthalten die erfindungsgemäßen Zusammensetzungen als weitere Komponente (D) mindestens einen Füllstoff, vorzugsweise in einer Menge von 5 bis 250 Gewichtsteilen und besonders bevorzugt von 20 bis 100 Gewichtsteilen der Komponente (D) bezogen auf 100 Gewichtsteile der Komponenten (A), (B) und (C).

Die erfindungsgemäßen Formmassen können insbesondere teilchenförmige oder faserförmige Zusatzstoffe enthalten.

Bevorzugte faserförmige Füll- oder Verstärkungsstoffe sind Kohlenstofffasern, Kaliumtitanatwhisker, Aramidfasern und besonders bevorzugt Glasfasern. Bei der Verwendung von Glasfasern können diese zur besseren Verträglichkeit mit dem Matrixmaterial mit einer Schlichte, bevorzugt einer Polymethanschlichte und einem Haftvermittler ausgerüstet sein. Im Allgemeinen haben die verwendeten Kohlenstoff- und Glasfasern einen Durchmesser im Bereich von 6 bis 20 µm.

### Komponente (D) besteht vorzugsweise aus Glasfasern.

Die Einarbeitung der Glasfasern kann sowohl in Form von Kurzglasfasern als auch in Form von Endlossträngen (Rovings) erfolgen. Im fertigen Spritzgussteil liegt die mittlere Länge der Glasfasern vorzugsweise im Bereich von 0,08 bis 0,5 mm.

Kohlenstoff- oder Glasfasern können auch in Form von Geweben, Matten oder Glasseidenrovings eingesetzt werden.

Als teilchenförmige Füllstoffe eignen sich amorphe Kieselsäure, Carbonate wie Magnesiumcarbonat (Kreide), gepulverter Quarz, Glimmer, unterschiedlichste Silikate wie Tone, Muskovit, Biotit, Suzoit, Zinnmaletit, Talkum, Chlorit, Phlogophit, Feldspat, Calciumsilikate wie Wollastonit oder Aluminiumsilikate wie Kaolin, besonders kalzinierter Kaolin.

Nach einer besonders bevorzugten Ausführungsform werden teilchenförmige Füllstoffe verwendet, von denen mindestens 95 Gew.-%, bevorzugt mindestens 98 Gew.-% der Teilchen einen Durchmesser (größte Ausdehnung), bestimmt am fertigen Produkt, von weniger als 45 µm, bevorzugt weniger als 40 µm aufweisen und deren so genanntes Aspektverhältnis im Bereich von 1 bis 25, bevorzugt im Bereich von 2 bis 20 liegt, bestimmt am fertigen Produkt.

Die Teilchendurchmesser können dabei z. B. dadurch bestimmt werden, dass elektronenmikroskopische Aufnahmen von Dünnschnitten der Polymermischung aufgenommen und mindestens 25, bevorzugt mindestens 50 Füllstoffteilchen für die Auswertung herangezogen werden. Ebenso kann die Bestimmung der Teilchendurchmesser über Sedimentationsanalyse erfolgen, gemäß Transactions of ASAE, Seite 491 (1983). Der Gewichtsanteil der Füllstoffe, die weniger als 40 µm beträgt kann auch mittels Siebanalyse gemessen werden. Das Aspektverhältnis ist das Verhältnis von Teilchendurchmesser zu Dicke (größter Ausdehnung zu kleinster Ausdehnung).

Besonders bevorzugt werden als teilchenförmige Füllstoffe Talkum, Kaolin, wie kalzinierter Kaolin oder Wollastonit oder Mischungen aus zwei oder allen dieser Füllstoffe. Darunter wird Talkum mit einem Anteil von mindestens 95 Gew.-% an Teilchen mit einem Durchmesser von kleiner als 40 µm und einem Aspektverhältnis von 1,5 bis 25, jeweils bestimmt am fertigen Produkt, besonders bevorzugt. Kaolin hat bevorzugt einen Anteil von mindestens 95 Gew.-% an Teilchen mit einem Durchmesser von kleiner als 20 µm und ein Aspektverhältnis von 1,2 bis 20, jeweils bestimmt am fertigen Produkt.

Die Zusammensetzungen können außerdem weitere Komponenten E enthalten.

### Komponente E

Die erfindungsgemäßen Formmassen können als weitere Komponente (E) Hilfsstoffe, insbesondere Verarbeitungshilfsmittel, Pigmente, Stabilisatoren, Flammschutzmittel oder Mischungen unterschiedlicher Additive enthalten. Übliche Zusatzstoffe sind beispielsweise auch Oxidationsverzögerer, Mittel gegen Wärmezersetzung und Zersetzung durch ultraviolettes Licht, Gleit- und Entformungsmittel, Farbstoffe und Weichmacher.

Der Anteil der Komponente (E) in der erfindungsgemäßen Formmasse beträgt insbesondere von 0 bis zu 30, vorzugsweise von 0 bis zu 20 Gew.-%, insbesondere 0 bis 15 Gew.-%, bezogen auf das Gesamtgewicht der Komponenten A bis E. Falls die Komponente E Stabilisatoren beinhaltet, beträgt der Anteil dieser Stabilisatoren üblicherweise bis zu 2 Gew.-%, vorzugsweise 0,01 bis 1 Gew.-%, insbesondere 0,01 bis 0,5 Gew.-%, bezogen auf die Summe der Gew.-% der Komponenten (A) bis (E).

Pigmente und Farbstoffe sind allgemein in Mengen von 0 bis 6, bevorzugt von 0,05 bis 5 und insbesondere von 0,1 bis 3 Gew.-%, bezogen auf die Summe der Gew.-% der Komponenten (A) bis (E), enthalten.

Die Pigmente zur Einfärbung von Thermoplasten sind allgemein bekannt, siehe zum Beispiel R. Gächter und H. Müller, Taschenbuch der Kunststoffadditive, Carl Hanser Verlag, 1983, Seiten 494 bis 510. Als erste bevorzugte Gruppe von Pigmenten sind Weißpigmente zu nennen, wie Zinkoxid, Zinksulfid, Bleiweiß [2 PbCO₃·Pb(OH)₂], Lithopone, Antimonweiß und Titandioxid. Von den beiden gebräuchlichsten Kristallmodifikationen (Rutil- und Anatas-Typ) des Titandioxids wird insbesondere die Rutilform zur Weißfärbung der erfindungsgemäßen Formmassen verwendet. Schwarze Farbpigmente, die erfindungsgemäß eingesetzt werden können, sind Eisenoxidschwarz (Fe₃O₄), Spinellschwarz [Cu(Cr, Fe)₂O₄], Manganschwarz (Mischung aus Mangandioxid, Siliciumdioxid und Eisenoxid), Kobaltschwarz und Antimonschwarz sowie besonders bevorzugt Ruß, der meist in Form von Furnace- oder Gasruß eingesetzt wird. Siehe hierzu G. Benzing, Pigmente für Anstrichmittel, Expert-Verlag (1988), Seiten 78 ff.

Zur Einstellung bestimmter Farbtöne können anorganische Buntpigmente, wie Chromoxidgrün oder organische Buntpigmente, wie Azopigmente oder Phthalocyanine erfindungsgemäß eingesetzt werden. Derartige Pigmente sind allgemein im Handel üblich. Oxidationsverzögerer und Wärmestabilisatoren, die den thermoplastischen Massen gemäß der Erfindung zugesetzt werden können, sind zum Beispiel Halogenide von Metallen der Gruppe I des Periodensystems, zum Beispiel Natrium-, Kalium-, Lithium-Halogenide, zum Beispiel Chloride, Bromide oder Iodide. Weiterhin können Zinkfluorid und Zinkchlorid verwendet werden. Ferner sind sterisch gehinderte Phenole, Hydrochinone, substituierte Vertreter dieser Gruppe, sekundäre aromatische Amine, gegebenenfalls in Verbindung mit phosphorhaltigen Säuren bzw. deren Salze, und Mischungen dieser Verbindungen, vorzugsweise in Konzentrationen bis zu 1 Gew.-%, bezogen auf die Summe der Gew.-% der Komponenten (A) bis (E) einsetzbar.

Beispiele für UV-Stabilisatoren sind verschiedene substituierte Resorcine, Salicylate, Benzotriazole und Benzophenone, die im Allgemeinen in Mengen bis zu 2 Gew.-% eingesetzt werden.

Gleit- und Entformungsmittel, die in der Regel in Mengen bis zu 1 Gew.-% bezogen auf die Summe der Gew.-% der Komponenten (A) bis (E) zugesetzt werden, sind Stearylalkohol, Stearinsäurealkylester und -amide sowie Ester des Pentaerythrits mit langkettigen Fettsäuren. Es können auch Dialkylketone, zum Beispiel Distearylketon, eingesetzt werden.

Als bevorzugten Bestandteil enthalten die erfindungsgemäßen Formmassen von 0,1 bis 2, bevorzugt 0,1 bis 1,75, besonders bevorzugt 0,1 bis 1,5 Gew.-% und insbesondere von 0,1 bis 0,9 Gew.-% (bezogen auf die Summe der Gew.-% der Komponenten (A) bis (E)) an Stearinsäure und/oder Stearaten. Im Prinzip können auch andere Stearinsäurederivate wie Ester der Stearinsäure eingesetzt werden.

Stearinsäure wird bevorzugt durch Hydrolyse von Fetten hergestellt. Die dabei erhaltenen Produkte stellen üblicherweise Mischungen aus Stearinsäure und Palmitinsäure dar. Daher haben solche Produkte einen breiten Erweichungsbereich, zum Beispiel von 50 bis 70 °C, je nach Zusammensetzung des Produkts. Bevorzugt werden Produkte mit einem Anteil an Stearinsäure von mehr als 20, besonders bevorzugt mehr als 25 Gew.-% verwendet. Es kann auch reine Stearinsäure (> 98 %) verwendet werden.

Des Weiteren kann Komponente (E) auch Stearate beinhalten. Stearate können entweder durch Umsetzung entsprechender Natriumsalze mit Metallsalzlösungen (zum Beispiel CaCl₂, MgCl₂, Aluminiumsalze) oder durch direkte Umsetzung der Fettsäure mit Metallhydroxid hergestellt werden (siehe zum Beispiel Baerlocher Additives, 2005). Bevorzugt wird Aluminiumtristearat verwendet.

Als weitere Zusatzstoffe kommen auch so genannte Nukleierungsmittel, wie beispielsweise Talkum, in Betracht.

### Herstellung der Zusammensetzungen

Die Reihenfolge, in der die Komponenten (A) bis (E) gemischt werden ist beliebig.

Die erfindungsgemäßen Formmassen können nach an sich bekannten Verfahren, beispielsweise Extrusion, hergestellt werden. Die erfindungsgemäßen Formmassen können z.B. hergestellt werden, indem man die Ausgangskomponenten in üblichen Mischvorrichtungen wie Schneckenextrudern vorzugsweise Zweischneckenextrudern, Brabender-Mischer oder Banbury-Mischer sowie Knetern mischt und anschließend extrudiert. Nach der Extrusion wird das Extrudat abgekühlt und zerkleinert. Die Reihenfolge der Mischung der Komponenten kann variiert werden, so können zwei oder ggf. drei Komponenten vorgemischt werden, es können aber auch alle Komponenten gemeinsam gemischt werden.

Um eine möglichst homogene Durchmischung zu erhalten, ist eine intensive Durchmischung vorteilhaft. Dazu sind im Allgemeinen mittlere Mischzeiten von 0,2 bis 30 Minuten bei Temperaturen von 280 bis 380°C, bevorzugt 290 bis 370°C, erforderlich. Nach der Extrusion wird das Extrudat in der Regel abgekühlt und zerkleinert.

Die erfindungsgemäßen Formmassen zeichnen sich durch gute mechanische Eigenschaften, gegenüber dem Stand der Technik verbesserte Fließfähigkeit und verbesserte Spannungsrissbeständigkeit aus.

Die erfindungsgemäßen Formmassen zeichnen sich durch gute Fließfähigkeit bei gleichzeitig verbesserter Zähigkeit, vor allem Reißdehnung und Kerbschlagzähigkeit aus. Die erfindungsgemäßen Formmassen eignen sich daher zur Herstellung von Formteilen für Haushaltsartikel, elektrische oder elektronische Bauteile sowie für Formteile für den Fahrzeugsektor.

Die erfindungsgemäßen thermoplastischen Formmassen können vorteilhaft zur Herstellung von Formteilen verwendet werden.

Ein weiterer Gegenstand der vorliegenden Erfindung ist die Verwendung gemäß Anspruch 15 von Anhydriden von mehrfunktionellen Carbonsäuren wie im Rahmen von Komponente (C) beschrieben in Zusammensetzungen enthaltend mindestens ein Polyarylenether und mindestens ein Polyarylensulfid, vorzugsweise zur Erhöhung der Steifigkeit oder zur Erhöhung der Reißdehnung oder zur Verbesserung der Schlagzähigkeit.

Die folgenden Beispiele erläutern die Erfindung näher, ohne sie einzuschränken.

### Beispiele

Die E-Moduli und die Reißdehnung der Proben wurden im Zugversuch nach ISO 527 an Schulterstäben ermittelt.

Die Schlagzähigkeit der Produkte wurde an ISO-Stäben nach ISO 179 1 eU bestimmt.

Die Fließfähigkeit wurde anhand der Schmelzeviskosität beurteilt. Die Schmelzestabilität wurde mittels eines Kapillarrheometers bestimmt. Dabei wurde die scheinbare Viskosität bei 350°C als Funktion der Scherrate bestimmt. Angegeben sind die bei 1000 Hz bestimmten Werte.

Die Spannungsrissbeständigkeit wurde nach DIN EN ISO 22088-3 an Probekörpern der Dicke von 2 mm bestimmt. Bei einer Biegedehnung von 1,32 % wurde das Prüfmedium verschieden lange einwirken lassen und der Zustand des Probekörpers anschließend visuell begutachtet.

Zur Bestimmung der Beständigkeit gegenüber Kraftstoff wurde der Kraftstoff FAM B 7 Tage bei 80°C einwirken lassen.

Der Zustand der Proben wurde anschließend visuell begutachtet:
+: unverändert +/-: leichte Oberflächenveränderung, keine erkennbaren Risse
-: starke Oberflächenveränderung, deutlich erkennbare Risse
--: Bruch der Probe

Die veränderten Stellen wurden im Lichtmikroskop auf Risse untersucht.

### Komponente A

Als Komponente A-1 wurde ein Polyethersulfon mit einer Viskositätszahl von 49,0 ml/g (Ultrason® E 1010 der BASF SE) verwendet. Das verwendete Produkt wies 0,16 Gew.-% CI-Endgruppen und 0,21 Gew.-% OCH₃-Endgruppen auf. Die OH-Endgruppen lagen unterhalb der Nachweisgrenze.

Als Komponente A-2 wurde ein Polyethersulfon mit einer Viskositätszahl von 55,6 ml/g verwendet, welches 0,20 Gew.-% OH-Endgruppen und 0,02 Gew.-% CI-Endgruppen aufwies.

### Komponente B

Als Komponente B-1 wurde ein Polyphenylensulfid mit einer Schmelzeviskosität von 145 Pa*s bei 330°C und einer Scherrate von 1000 Hz verwendet.

### Komponente C

Als Komponente C-1 wurde Bernsteinsäureanhydrid verwendet.

### Komponente D

Als Komponente D-1 wurden Schnittglasfasern mit einer Stapellänge von 4,5 mm und einem Faserdurchmesser von 10 µm eingesetzt, die mit einer Polyurethanschlichte versehen waren.

**Tabelle 1:**

| Versuch | V1 | V2 | V3 | 4 | 5 | 6 | 7 | 8 |
|---|---|---|---|---|---|---|---|---|
| Komp. A-1 | 70 | 41 | 36 | 36 | 36 | 30 | 33 | 36 |
| Komp. B-1 | | 14 | 14 | 13,99 | 13,995 | 19,99 | 11,99 | 13,85 |
| Komp. A-2 | | | 5 | 5 | 5 | 5 | 5 | 5 |
| Komp. C-1 | | | | 0,01 | 0,005 | 0,01 | 0,01 | 0,15 |
| Komp. D-1 | 30 | 45 | 45 | 45 | 45 | 45 | 50 | 45 |
| E-Modul [GPa] | 9,40 | 16,5 | 16,4 | 16,5 | 16,5 | 17,2 | 18,9 | 16,4 |
| Reißdehnung [%] | 2,4 | 1,4 | 1,6 | 1,8 | 1,8 | 1,7 | 1,6 | 1,3 |
| ISO 179 1eU [kJ/m²] | 48 | 41 | 43 | 47 | 46 | 44 | 42 | 37 |
| Viskosität bei 10³ Hz [350°C] | 690 | 551 | 563 | 560 | 565 | 491 | 625 | 564 |
| Beständigkeit Gegen FAM B bei 25°C | +/- | + | + | + | + | + | + | + |

Die Zusammensetzungen sind in Gewichtsteilen angegeben.

Die erfindungsgemäßen Formmassen zeichnen sich durch eine Kombination aus hoher Steifigkeit, guter Zähigkeit, niedriger Viskosität und guter Beständigkeit gegenüber Kraftstoff aus.

## Patentansprüche

1. Zusammensetzung enthaltend folgende Komponenten:
(A) mindestens ein Polyarylenether,
(B) mindestens ein Polyarylensulfid, und
(C) mindestens ein Anhydrid einer mehrfunktionellen Carbonsäure mit einem zahlenmittleren Molekulargewicht von höchstens 600 g/mol, wobei Komponente (A) folgende Bestandteile umfasst:
(A1) mindestens ein Polyarylenether mit höchstens 0,01 Gew.-% phenolischer Endgruppen berechnet als Gewichtsmenge OH bezogen auf die Gewichtsmenge der Komponente (A1), und
(A2) mindestens ein Polyarylenether mit mindestens 0,1 Gew.-% phenolischer Endgruppen berechnet als Gewichtsmenge OH bezogen auf die Gewichtsmenge der Komponente (A2).

2. Zusammensetzung nach Anspruch 1, wobei Komponente (A) einen Gehalt phenolischer Endgruppen von mindestens 0,04 Gew.-% aufweist, berechnet als Gewichtsmenge OH bezogen auf die Gewichtsmenge der Komponente (A).

3. Zusammensetzung nach Anspruch 1 oder 2, wobei die Polyarylenether der Komponente (A2) durch ein Verfahren erhältlich sind, welches folgende Schritte in der Reihenfolge a-b-c umfasst:
(a) Bereitstellung mindestens eines Polyarylenethers (P), der überwiegend Phenolat-Endgruppen aufweist, in Gegenwart eines Lösungsmittels (L),
(b) Zugabe mindestens einer mehrfunktionellen Carbonsäure und
(c) Gewinnung der Polyarylenether der Komponente (A2) als Feststoff.

4. Zusammensetzung nach Anspruch 1 bis 3, wobei die Polyarylenether der Komponente (A) aufgebaut sind aus Bausteinen der allgemeinen Formel I: 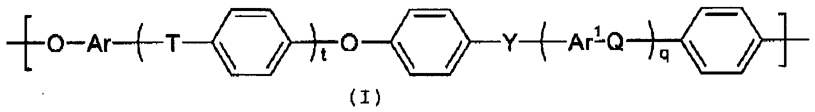 mit folgenden Bedeutungen
t, q: unabhängig voneinander 0, 1, 2 oder 3,
Q, T, Y: unabhängig voneinander jeweils eine chemische Bindung oder Gruppe, ausgewählt aus -O-, -S-, -SO₂-, S=O, C=O, -N=N- und -CR^{a}R^{b}-, wobei R^{a} und R^{b} unabhängig voneinander jeweils für ein Wasserstoffatom oder eine C₁-C₁₂-Alkyl-, C₁-C₁₂-Alkoxy- oder C₆-C₁₆-Arylgruppe stehen, wobei wenigstens eines aus Q, T und Y von -O- verschieden ist, und wenigstens eines aus Q, T und Y für -SO₂- steht und
Ar, Ar¹: unabhängig voneinander C₆-C₁₈-Arylengruppe.

5. Zusammensetzung nach Anspruch 4, wobei Q, T und Y in Formel (I) unabhängig voneinander ausgewählt sind aus -O- und -SO₂- und wenigstens eines aus Q, T und Y für -SO₂- steht.

6. Zusammensetzung nach den Ansprüchen 4 oder 5, wobei Ar und Ar¹ in Formel (I) unabhängig voneinander ausgewählt sind aus der Gruppe bestehend aus 1,4-Phenylen, 1,3-Phenylen, Naphthylen und 4,4'-Bisphenylen.

7. Zusammensetzung nach den Ansprüchen 1 bis 6 enthaltend von 60 bis 94,999 Gew.-% der Komponente (A), von 5 bis 49,7 Gew.-% der Komponente (B) und von 0,001 bis 0,3 Ges.-% der Komponente (C), wobei die Summe der Ges.-% der Komponenten (A), (B) und (C) 100 Gew.-% ergibt.

8. Zusammensetzung nach den Ansprüchen 1 bis 7, wobei die Polyarylensulfide der Komponente (B) von 30 bis 100 Gew.-% aus Wiederholungseinheiten gemäß der allgemeinen Formel -Ar-S- aufgebaut sind, wobei -Ar- eine Arylengruppe mit 6 bis 18 Kohlenstoffatomen darstellt.

9. Zusammensetzung nach den Ansprüchen 1 bis 8, wobei Komponente (B) Polyphenylensulfid, vorzugsweise Poly(1,4-pl-enylensulfid) ist.

10. Zusammensetzung nach den Ansprüchen 1 bis 9, wobei Komponente (C) aus mindestens einem Anhydrid einer mehrfunktionellen Carbonsäure gemäß der allgemeinen Struktur IV besteht:
HOOC-R-COOH (IV),
wobei R einen linearen oder verzweigten Kohlenwasserstoffrest mit 2 bis 20 Kohlenstoffatomen repräsentiert, der optional weitere funktionelle Gruppen, vorzugsweise ausgewählt aus OH und COOH, enthält, mit der Maßgabe, dass mindestens zwei COOH-Gruppen jeder mehrfunktionellen Carbonsäure über zwei oder drei Kohlenstoffatome miteinander verbunden sind.

11. Zusammensetzung nach den Ansprüchen 1 bis 10, wobei Komponente (C) Bernsteinsäureanhydrid ist.

12. Zusammensetzung nach den Ansprüchen 1 bis 11 enthaltend als weitere Komponente (D) mindestens einen Füllstoff.

13. Zusammensetzung nach Anspruch 12 enthaltend von 5 bis 250 Gewichtsteile der Komponente (D) bezogen auf 100 Gewichtsteile der Mischung aus den Komponenten (A), (B) und (C).

14. Zusammensetzung nach Anspruch 12 oder 13, wobei Komponente (D) aus Glasfasern besteht.

15. Verwendung von Anhydriden mehrfunktioneller Carbonsäuren (C) wie in den Ansprüchen 1 bis 14 definiert in Zusammensetzungen enthaltend mindestens ein Polyarylenether (A) und mindestens ein Polyarylensulfid (B) zur Erhöhung der Steifigkeit, zur Erhöhung der Reißdehnung oder zur Verbesserung der Schlagzähigkeit,
wobei Komponente (A) folgende Bestandteile umfasst:
(A1) mindestens ein Polyarylenether mit höchstens 0,01 Gew.-% phenolischer Endgruppen berechnet als Gewichtsmenge OH bezogen auf die Gewichtsmenge der Komponente (A1), und
(A2) mindestens ein Polyarylenether mit mindestens 0,1 Gew.-% phenolischer Endgruppen berechnet als Gewichtsmenge OH bezogen auf die Ge-wichtsmenge der Komponente (A2).

## Claims

1. A composition comprising the following components:
(A) at least one polyarylene ether,
(B) at least one polyarylene sulfide, and
(C) at least one anhydride of a polybasic carboxylic acid with a number-average molar mass of at most 600 g/mol, where component (A) comprises the following constituents:
(A1) at least one polyarylene ether having at most 0.01 % by weight of phenolic end groups, calculated as amount by weight of OH, based on the amount by weight of component (A1), and
(A2) at least one polyarylene ether having at least 0.1% by weight of phenolic end groups, calculated as amount by weight of OH, based on the amount by weight of component (A2).

2. The composition according to claim 1, where component (A) has at least 0.04% by weight content of phenolic end groups, calculated as amount by weight of OH, based on the amount by weight of component (A).

3. The composition according to claim 1 or 2, where the polyarylene ethers of component (A2) are obtainable via a process which comprises the following steps in the sequence a-b-c:
(a) provision of at least one polyarylene ether (P) which has predominantly phenolate end groups, in the presence of a solvent (S),
(b) addition of at least one polybasic carboxylic acid, and
(c) obtaining the polyarylene ethers of component (A2) in the form of solid.

4. The composition according to any of claims 1 to 3, where the polyarylene ethers of component (A) are composed of units of the general formula I: 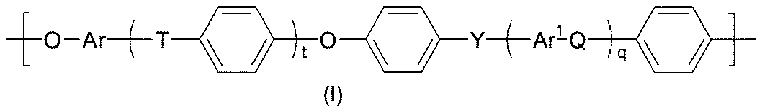 with the following definitions
t, q: independently of one another, 0, 1, 2, or 3,
Q, T, Y: in each case, independently of one another, a chemical bond or group selected from -O-, -S-, -SO₂-, S=O, C=O, -N=N-, and -CR^{a}R^{b}-, where R^{a} and R^{b}, independently of one another, are in each case a hydrogen atom or a C₁-C₁₂-alkyl, C₁-C₁₂-alkoxy, or C₆-C₁₈-aryl group, where at least one of Q, T, and Y differs from -O-, and at least one of Q, T, and Y is -SO₂-, and
Ar, Ar¹: independently of one another, a C₆-C₁₈-arylene group.

5. The composition according to claim 4, where Q, T, and Y in formula (I), independently of one another, have been selected from -O- and -SO₂-, and at least one of Q, T, and Y is -SO₂-.

6. The composition according to claim 4 or 5, where Ar and Ar¹ in formula (I), independently of one another, have been selected from the group consisting of 1,4-phenylene, 1,3-phenylene, naphthylene, and 4,4' -bisphenylene.

7. The composition according to claims 1 to 6, comprising from 50 to 94.999% by weight of component (A), from 5 to 49.7% by weight of component (B), and from 0.001 to 0.3% by weight of component (C), where the total of the % by weight values for components (A), (B), and (C) is 100% by weight.

8. The composition according to claims 1 to 7, where the polyarylene sulfides of component (B) are composed of from 30 to 100% by weight of repeat units according to the general formula -Ar-S-, where -Ar- is an arylene group having from 6 to 18 carbon atoms.

9. The composition according to claims 1 to 8, where component (B) is polyphenylene sulfide, preferably poly(1,4-phenylene sulfide).

10. The composition according to claims 1 to 9, where component (C) is composed of at least one anhydride of a polybasic carboxylic acid according to the general structure IV:
HOOC-R-COOH (IV),
where R represents a linear or branched hydrocarbon radical having from 2 to 20 carbon atoms and optionally comprising further functional groups, preferably selected from OH and COOH, with the proviso that at least two COOH groups of each polybasic carboxylic acid have bonding to one another by way of two or three carbon atoms.

11. The composition according to claims 1 to 10, where component (C) is succinic anhydride.

12. The composition according to claims 1 to 11 comprising, as further component (D), at least one filler.

13. The composition according to claim 12 comprising from 5 to 250 parts by weight of component (D), based on 100 parts by weight of the mixture composed of components (A), (B), and (C).

14. The composition according to claim 12 or 13, where component (D) is composed of glass fibers.

15. The use of anhydrides of polybasic carboxylic acids (C) as defined in claims 1 to 14 in compositions comprising at least one polyarylene ether (A) and at least one polyarylene sulfide (B) for increasing stiffness, for increasing tensile strain at break, or for improving impact resistance, where component (A) comprises the following constituents:
(A1) at least one polyarylene ether having at most 0.01 % by weight of phenolic end groups, calculated as amount by weight of OH, based on the amount by weight of component (A1), and
(A2) at least one polyarylene ether having at least 0.1% by weight of phenolic end groups, calculated as amount by weight of OH, based on the amount by weight of component (A2).

## Revendications

1. Composition contenant les composants suivants :
(A) au moins un polyarylène-éther,
(B) au moins un poly(sulfure d'arylène), et
(C) au moins un anhydride d'un acide carboxylique polyfonctionnel présentant un poids moléculaire numérique moyen d'au plus 600 g/mole, le composant (A) présentant les constituants suivants :
(A1) au moins un polyarylène-éther présentant au plus 0,01% en poids de groupes terminaux phénoliques, calculés sous forme de quantité pondérale OH par rapport à la quantité pondérale du composant (A1), et
(A2) au moins un polyarylène-éther présentant au moins 0,1% en poids de groupes terminaux phénoliques, calculés sous forme de quantité pondérale OH par rapport à la quantité pondérale du composant (A2).

2. Composition selon la revendication 1, le composant (A) présentant une teneur en groupes terminaux phénoliques d'au moins 0,04% en poids, calculée sous forme de quantité pondérale OH par rapport à la quantité pondérale du composant (A).

3. Composition selon la revendication 1 ou 2, les polyarylène-éthers du composant (A2) pouvant être obtenus par un procédé qui comprend les étapes suivantes, dans l'ordre a-b-c :
(a) préparation d'au moins un polyarylène-éther (P), qui présente principalement des groupes terminaux phénolate, en présence d'un solvant (L),
(b) addition d'au moins un acide carboxylique polyfonctionnel et
(c) production du/des polyarylène-éther(s) du composant (A2) sous forme solide.

4. Composition selon la revendication 1 à 3, les polyarylène-éthers du composant (A) étant formés à partir d'éléments de formule générale 1 : 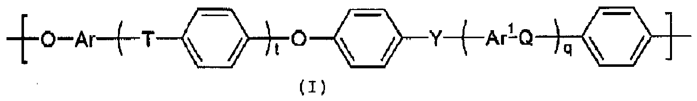 présentant les significations suivantes :
t, q : indépendamment l'un de l'autre, 0, 1, 2 ou 3,
Q, T, Y : indépendamment les uns des autres, à chaque fois une liaison ou un groupe chimique, choisi parmi -O-, -S-, -SO₂-, S=O, C=O, -N=N-, -CR^{a}R^{b}-, R^{a} et R^{b} représentant indépendamment l'un de l'autre à chaque fois un atome d'hydrogène ou un groupe C₁-C₁₂-alkyle, C₁-C₁₂-alcoxy ou C₆-C₁₈-aryle, au moins un parmi Q, T et Y étant différent de -O- et au moins un parmi Q, T et Y représentant -SO₂- et
Ar, Ar¹ : indépendamment l'un de l'autre un groupe C₆-C₁₈-arylène.

5. Composition selon la revendication 4, Q, T et Y dans la formule (I) étant choisis indépendamment les uns des autres parmi -O- et -SO₂- et au moins un parmi Q, T et Y représentant -SO₂-.

6. Composition selon les revendications 4 ou 5, Ar et Ar¹ dans la formule (I) étant choisis indépendamment l'un de l'autre dans le groupe constitué par 1,4-phénylène, 1,3-phénylène, naphtylène et 4,4'-bisphénylène.

7. Composition selon les revendications 1 à 6, contenant 50 à 94,999% en poids de composant (A), 5 à 49,7% en poids de composant (B) et 0,001 à 0,3% en poids de composant (C), la somme des % en poids des composants (A), (B) et (C) valant 100% en poids.

8. Composition selon les revendications 1 à 7, les poly(sulfures d'arylène) du composant (B) étant constitués par 30 à 100% en poids d'unités récurrentes selon la formule générale -Ar-S-, -Ar- représentant un groupe arylène comprenant 6 à 18 atomes de carbone.

9. Composition selon les revendications 1 à 8, le composant (B) étant du poly(sulfure de phénylène), de préférence du poly(sulfure de 1,4-phénylène).

10. Composition selon les revendications 1 à 9, le composant (C) étant constitué par au moins un anhydride d'un acide carboxylique polyfonctionnel selon la formule générale IV :
HOOC-R-COOH (IV),
R représentant un radical hydrocarboné linéaire ou ramifié comprenant 2 à 20 atomes de carbone, qui contient éventuellement d'autres groupes fonctionnels, de préférence choisis parmi OH et COOH, à condition qu'au moins deux groupes COOH de chaque acide carboxylique polyfonctionnel soient liés l'un à l'autre via deux ou trois atomes de carbone.

11. Composition selon les revendications 1 à 10, le composant (C) étant l'anhydride de l'acide succinique.

12. Composition selon les revendications 1 à 11 contenant comme autre composant (D) au moins une charge.

13. Composition selon la revendication 12 contenant 5 à 250 parties en poids de composant (D), par rapport à 100 parties en poids du mélange des composants (A), (B) et (C).

14. Composition selon la revendication 12 ou 13, le composant (D) étant constitué de fibres de verre.

15. Utilisation d'anhydrides d'acides carboxyliques polyfonctionnels (C) tels que définis dans les revendications 1 à 14 dans des compositions contenant au moins un polyarylène-éther (A) et au moins un poly(sulfure d'arylène) (B) pour augmenter la rigidité, pour augmenter l'allongement à la déchirure ou pour améliorer la résilience,
le composant (A) comprenant les constituants suivants :
(A1) au moins un polyarylène-éther présentant au plus 0,01% en poids de groupes terminaux phénoliques, calculés sous forme de quantité pondérale OH par rapport à la quantité pondérale du composant (A1), et
(A2) au moins un polyarylène-éther présentant au moins 0,1% en poids de groupes terminaux phénoliques, calculés sous forme de quantité pondérale OH par rapport à la quantité pondérale du composant (A2).
